# FASCICULE DE BREVET EUROPEEN

(11) **EP 3 620 705 B1**
(45) Date de publication et mention de la délivrance du brevet: **17.02.2021**
(21) Numéro de dépôt: 19194281.2
(22) Date de dépôt: 29.08.2019
(51) Int. Cl.: F16L 27/107, F16L 17/00, F16J 15/08, B64G 1/40, F02K 9/60, F16J 15/16

(54) **DISPOSITIF DE RACCORDEMENT AMÉLIORÉ POUR FLUIDE DANS UN ENGIN SPATIAL**
VERBESSERTE ANSCHLUSSVORRICHTUNG FÜR FLUID IN EINEM RAUMFLUGKÖRPER
IMPROVED CONNECTION DEVICE FOR FLUID IN A SPACECRAFT

(30) Priorité: 07.09.2018 FR 1858061
(43) Date de publication de la demande: 11.03.2020
(73) Titulaire: ArianeGroup SAS, 75015 Paris (FR)
(72) Inventeur: PYRE, Alain, 27950 Saint-Just (FR); LUQUET, Nicolas, 27200 Vernon (FR)
(74) Mandataire: Cabinet Beau de Loménie

(56) Documents cités:
- DE-A1- 4 103 075
- DE-A1-102016 208 145
- US-A- 4 054 306

## Description

L'invention présentée est un raccord de conduit de fluide pour des moteurs d'engin spatial.

### ETAT DE LA TECHNIQUE ANTERIEURE

Les moteurs spatiaux à ergols liquides nécessitent l'utilisation de composants permettant d'assurer des déplacements selon certains degrés de liberté dans les lignes fluides reliant leurs composants, en plus de naturellement présenter une tenue à des températures très basses ou très élevées.

Les dispositifs connus permettant de réaliser des raccords de conduits de fluide pour des engins spatiaux se divisent essentiellement en deux catégories :
- les cadrans, qui présentent de bonnes propriétés mécaniques mais qui sont généralement coûteux et massifs,
- les flexibles, qui sont relativement bon marché mais qui ont généralement de moins bonnes propriétés mécaniques et qui sont limités par leur diamètre et leur tenue en haute pression.
DE 41 03 075 A1 divulgue un dispositif de raccordement de conduits de fluide comprenant deux éléments de jonction présentant chacun une section de raccordement adaptée pour être solidarisée à un conduit, et un élément de raccordement reliant les éléments de jonction.

Ces solutions connues permettent de conserver une souplesse dans la liaison. Cependant, leurs contraintes respectives sont fortement pénalisantes dans le cadre d'une application pour un engin spatial pour lequel on cherche à assurer une tenue du dispositif tout en minimisant la masse, le coût et l'encombrement.

### PRESENTATION DE L'INVENTION

La présente invention vise ainsi à répondre au moins partiellement à ces problématiques, et propose ainsi un dispositif de raccordement de conduits de fluide comprenant deux éléments de jonction présentant chacun une section de raccordement adaptée pour être solidarisée à un conduit, et un élément de raccordement reliant les éléments de jonction comprenant au moins deux tubes concentriques définissant un empilement, chaque empilement étant lié uniquement à un élément de jonction et les empilements des deux éléments de jonction différents se chevauchent partiellement de sorte que les tubes des deux empilements se chevauchent de manière alternée.

L'invention permet d'assurer certains degrés de liberté à la liaison: la compression, la flexion dans n'importe quelle direction et la rotation autour de l'axe de conduite sont des mouvements possibles dans les modes de réalisation de l'invention. L'intérêt de la présence de tels degrés de liberté est de limiter les efforts aux interfaces entre les conduits et les composants qu'elle relie, ainsi que les efforts au sein même de la tuyauterie constituant les conduits ; efforts générés en fonctionnement sous l'effet des charges de pression et de température. Dans le cas d'architectures hyperstatiques de moteurs fusées, ces charges peuvent être extrêmement élevées. La présence de degrés de liberté permet de les absorber au moins en partie.

Dans certains modes de réalisation, le dispositif de raccordement de conduits comprend une cale disposée entre l'élément de jonction et les empilements.

Dans certains modes de réalisation, la cale peut être configurée de manière à exercer un effort de serrage sur les empilements, notamment lorsque la pression de fluide au sein du dispositif de raccordement exerce une force importante, la cale est alors serrée par le dispositif de raccordement sur les empilements au niveau de leurs chevauchements afin de former une zone d'étanchéité.

Dans certains modes de réalisation, la cale est composée d'au moins deux parties.

Dans certains modes de réalisation, la cale est réalisée en métal.

Dans certains modes de réalisation, les tubes sont constitués d'un matériau parmi l'acier ou des alliages de nickel comme l'Inconel 625 ou l'Inconel 718.

Dans certains modes de réalisation, le dispositif de raccordement comprend une poche disposant d'orifices permettant son insertion autour de conduits et de moyens de liaison à des conduits et d'un drain adapté pour évacuer le fluide de la poche.

Le fluide est typiquement un fluide cryotechnique.

Le présent exposé concerne également un tronçon de conduit comprenant deux conduits et un dispositif de raccordement selon l'un des précédents modes de réalisation, dans lequel les éléments de jonction sont chacun solidarisés à un des conduits.

Le présent exposé concerne également un tronçon de conduit comprenant deux conduits et un dispositif de raccordement selon l'un des précédents modes de réalisation, dans lequel les éléments de jonction sont chacun solidarisés à un des conduits, et dans lequel les orifices de la poche sont solidarisés de manière étanche autour de chacun des conduits.

Le présent exposé concerne également un engin spatial comprenant un tronçon de conduit selon l'un des précédents modes de réalisation.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en coupe d'un exemple de dispositif selon un aspect de l'invention,
- la figure 2 est une vue du dispositif selon un autre plan de coupe,
- la figure 3 présente une variante de dispositif selon un aspect de l'invention,
- la figure 4 présente un exemple d'application du dispositif à des conduites de fluide.

Sur l'ensemble des figures, les éléments en commun sont repérés par des références numériques identiques.

### DESCRIPTION DETAILLEE D'EXEMPLES DE REALISATION

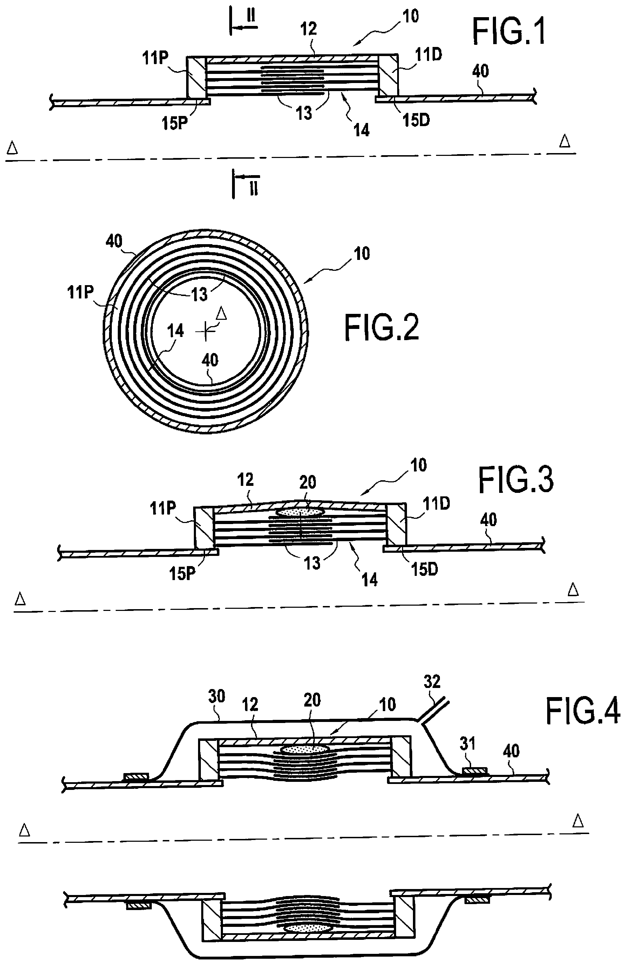

La figure 1 est une vue en coupe représentant schématiquement un dispositif de raccordement selon un aspect de l'invention.

Le dispositif de raccordement 10 tel que représenté sur la figure 1, permet de relier deux conduits de fluide tout en maintenant une certaine souplesse dans la liaison.

Le dispositif de raccordement 10 tel que présenté comprend deux éléments de jonction 11P et 11D définissant respectivement une extrémité proximale et une extrémité distale (les dénominations proximale et distale étant utilisées de manière arbitraire à des fins d'illustration). Chacun des éléments de jonction 11P et 11D présente une section, respectivement 15P et 15D, adaptée pour recevoir un conduit 40 de fluide.

Les éléments de jonction 11 présentent typiquement une forme générale d'anneau ou de tube, présentant une ouverture centrale circulaire définissant les sections 15P et 15D.

Le dispositif de raccordement 10 comprend également un élément de raccordement 12 reliant entre eux les éléments de liaisons 11P et 11D, et définissant ainsi un volume interne au dispositif de raccordement 10 délimité par l'élément de raccordement 12 et les éléments de liaison 11P et 11D. L'élément de raccordement 12 présente typiquement une forme générale de cylindre de révolution autour d'un axe central. L'élément de raccordement 12 est typiquement une tresse métallique, ce qui assure ainsi une flexibilité à l'élément de raccordement 12, sans réaliser de fonction d'étanchéité. Lorsque du fluide passe dans le dispositif 10, l'élément de raccordement 12 permet de faire transiter un effort axial au niveau de la liaison, et ainsi de réaliser une fonction de reprise de l'effort dû à la différence de pression entre la conduite et le milieu extérieur du dispositif.

Au moins deux tubes 13 concentriques sont solidarisés à chacun des éléments de jonctions 11P et 11D, typiquement par soudage. Les tubes 13 s'étendent dans le volume interne du dispositif de raccordement 10, depuis l'élément de jonction 11P ou 11D auquel ils sont solidarisés et vers l'autre élément de jonction 11D ou 11P. Les tubes 13 présentent par exemple chacun une section circulaire autour d'une même génératrice Δ. Cependant, l'invention ne se limite pas à ce mode de réalisation, les tubes 13 pouvant notamment être maintenus par un effort de pincement au niveau des éléments de jonction 11P et 11D dans un autre mode de réalisation.

On définit pour chaque élément de jonction 11 un empilement de tubes, correspondant à l'ensemble des tubes 13 solidarisés à cet élément de jonction. Chaque tube 13 est solidarisé à un unique élément de jonction 11 par une de ses extrémités, et présente donc une autre extrémité libre.

Chacun des tubes 13 présente une longueur selon la direction définie par la génératrice Δ strictement inférieure à la longueur de l'élément de raccordement 12 selon la génératrice Δ. Typiquement, la longueur des tubes 13 selon la génératrice Δ est comprise entre 55% et 75% de la longueur de l'élément de raccordement 12 selon la génératrice Δ. Ainsi, les extrémités libres des différents tubes 13 se chevauchent. Les tubes 13 sont positionnés de manière à former un chevauchement alterné entre les tubes reliés à l'élément de jonction proximal 11P et les tubes reliés à l'élément de jonction distal 11D, comme illustré sur les figures.

Le chevauchement alterné des tubes 13 permet de former une liaison non-étanche entre les deux empilements de tubes, et donc entre les éléments de jonction 11P et 11D. En fonctionnement, la pression du fluide au sein du dispositif 10 va entraîner un effort de serrage sur les différents tubes 13, ce qui entraine un maintien au contact de leurs extrémités libres (ou plus généralement de leurs portions se chevauchant) permettant ainsi d'améliorer l'étanchéité et de limiter les fuites de fluide. On comprend que la multiplication des tubes permet également d'améliorer l'étanchéité de cette liaison en multipliant les zones de contact entre les chevauchements.

L'association d'un élément de raccordement 12 flexible et d'un tel empilement de tubes permet de conférer une flexibilité à la liaison, tout en présentant une tenue mécanique importante dans la mesure où le dispositif 10 est typiquement réalisé en acier ou en alliages de nickel comme l'Inconel 625 ou l'Inconel 718.

On comprend cependant que la liaison formée est de par sa nature non étanche. Des fuites limitées de fluide se produisent au niveau du chevauchement des tubes 13, et l'élément de raccordement 12 n'assure typiquement pas non plus une étanchéité du dispositif 10.

Afin de limiter les fuites de fluide, une cale 20 est typiquement positionnée entre l'élément de raccordement 12 et les tubes de plus grands diamètres des empilements de tubes, typiquement au niveau du chevauchement des extrémités libres des tubes 13, comme représenté sur la figure 3. La cale 20 est dimensionnée de manière à exercer un effort tendant à compresser les tubes des empilements, qui tend ainsi à maintenir les parties des tubes se chevauchant au contact les unes des autres, et ainsi à limiter l'écoulement de fluide entre les tubes et donc à améliorer l'étanchéité du dispositif.

La cale 20 est typiquement composée d'au moins deux parties afin d'être facilement montée autour des empilements 14. Elle est ensuite serrée au montage par l'élément de raccordement 12, les deux parties composant la cale 20 pouvant le cas échéant être solidarisées une fois positionnées autour des empilements 14.

Le choix de la forme et du matériau de la cale 20 permet d'optimiser les performances en étanchéité du dispositif 10.

Le dispositif peut être associé à une poche 30 afin de gérer et recueillir les fuites de fluide. La figure 4 représente un tel mode de réalisation. La poche 30 présente des orifices permettant de la positionner autour du dispositif 10 lorsque ce dernier est associé à des conduits 40, alors en contact avec les sections 15 des éléments de jonction. La poche est ainsi positionnée de façon à comprendre dans son sein le dispositif 10 et une section des conduits 40 solidarisés au dispositif 10 par l'intermédiaire des sections 15 des éléments de jonction. La poche 30 comprend également des moyens de liaison 31 adaptés pour être enserrés autour des conduits 40, et ainsi former une liaison étanche autour des conduits 40.

La poche 30 permet de recueillir le fluide qui s'échappe du dispositif 10, et par exemple de le réinjecter dans un circuit ou un réservoir dédié, ou l'évacuer vers une zone ou le fluide n'a aucun risque d'exploser ni de s'enflammer ni de perturber le système d'une quelconque façon. La poche 30 comprend ainsi typiquement un drain 32 adapté pour évacuer le fluide recueilli par la poche 30, le drain 32 étant typiquement relié à un circuit ou à un réservoir de fluide adapté, ou plus généralement une zone pouvant recueillir le fluide sans risque. L'utilisation d'une poche 30 telle que présentée est particulièrement avantageux dans le cas où l'élément de raccordement 12 est non étanche, par exemple lorsqu'il est formé d'une tresse métallique.

Le dispositif 10 proposé repose ainsi sur une approche novatrice, à savoir proposer une jonction qui n'assure pas une étanchéité parfaite, mais permettant de proposer une liaison avec une flexibilité importante ainsi qu'un poids, un encombrement et un coût de réalisation réduits.

Par ailleurs, le fait que la jonction ne soit pas étanche est notamment avantageux en ce que la jonction permet d'évacuer d'éventuelles particules présentes dans le fluide, ou qui pourraient être libérées du fait du frottement entre les tubes 13. En effet, le fluide qui s'écoule dans les conduits 40 est sous pression ; si des particules venaient à être libérées par frottement au niveau des empilements 14, elles seraient alors attirées préférentiellement vers l'extérieur du conduit, c'est-à-dire vers l'extérieur des empilements, et peuvent ainsi être recueillies par la poche 30 puis être évacuées par le drain 32, ou plus généralement dans un volume de fluide hors de l'écoulement.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif de raccordement de conduits (10) de fluide comprenant deux éléments de jonction (11) présentant chacun une section de raccordement adaptée pour être solidarisée à un conduit, et un élément de raccordement (12) reliant les éléments de jonction (11);
**caractérisé en ce que** chaque élément de jonction (11) comprend au moins deux tubes (13) concentriques définissant un empilement (14);
chaque empilement (14) est lié uniquement à un élément de jonction (11) ;
les empilements des deux éléments de jonction (11) différents se chevauchent partiellement ; de sorte que les tubes (13) des deux empilements (14) se chevauchent de manière alternée.

2. Un dispositif de raccordement (10) de conduits selon la revendication 1 comprenant une cale (20) disposée entre l'élément de jonction (12) et les empilements (14).

3. Dispositif selon la revendication 2, dans lequel la cale (20) est configurée de manière à exercer un effort de serrage sur les empilements.

4. Un dispositif selon la revendication 2 **caractérisé en ce que** la cale (20) est composée d'au moins deux parties.

5. Un dispositif selon la revendication 2 **caractérisé en ce que** la cale (20) est réalisée en métal.

6. Un dispositif de raccordement de conduits (10) selon l'une des revendications 1 à 4 **caractérisé en ce que** les tubes (13) sont constitués d'un matériau parmi l'acier ou des alliages de nickel comme l'Inconel 625 ou l'Inconel 718.

7. Un ensemble comprenant un dispositif de raccordement de conduits (10) selon l'une des revendications 1 à 6 et une poche (30) disposant d'orifices permettant son insertion autour de conduits (40) et de moyens de liaison (31) à des conduits et d'un drain (32) adapté pour évacuer le fluide de la poche (30).

8. Un tronçon de conduit comprenant deux conduits (40) et un dispositif de raccordement (10) selon l'une des revendications 1 à 6, dans lequel les éléments de jonction (11) sont chacun solidarisés à un des conduits (40).

9. Un tronçon de conduit comprenant deux conduits (40) et un ensemble selon la revendication 7, dans lequel les éléments de jonction (11) sont chacun solidarisés à un des conduits (40), et dans lequel les orifices de la poche (30) sont solidarisés de manière étanche autour de chacun des conduits (40).

10. Un engin spatial comprenant un tronçon de conduit selon l'une des revendications 8 ou 9.

## Patentansprüche

1. Vorrichtung zum Anschließen von Fluidleitungen (10), umfassend zwei Verbindungselemente (11), die jeweils einen Anschlussabschnitt aufweisen, der dazu ausgelegt ist, mit einer Leitung fest verbunden zu werden, sowie ein Anschlusselement (12), das die Verbindungselemente (11) verbindet,
**dadurch gekennzeichnet, dass** jedes Verbindungselement (11) wenigstens zwei konzentrische Rohre (13) umfasst, die einen Stapel (14) definieren,
jeder Stapel (14) nur mit einem Verbindungselement (11) verbunden ist,
die Stapel der beiden unterschiedlichen Verbindungselemente (11) sich teilweise überlappen, so dass sich die Rohre (13) der beiden Stapel (14) abwechselnd überlappen.

2. Vorrichtung zum Anschließen (10) von Leitungen nach Anspruch 1, umfassend einen Keil (20), der zwischen dem Verbindungselement (12) und den Stapeln (14) angeordnet ist.

3. Vorrichtung nach Anspruch 2, bei der der Keil (20) derart ausgestaltet ist, dass er eine Klemmkraft auf die Stapel ausübt.

4. Vorrichtung nach Anspruch 2, **dadurch gekennzeichnet, dass** der Keil (20) aus wenigstens zwei Teilen besteht.

5. Vorrichtung nach Anspruch 2, **dadurch gekennzeichnet, dass** der Keil (20) aus Metall gefertigt ist.

6. Leitungsanschlussvorrichtung (10) nach einem der Ansprüche 1 bis 4, **dadurch gekennzeichnet, dass** die Rohre (13) aus einem Material aus Stahl oder Nickellegierungen wie Inconel 625 oder Inconel 718 bestehen.

7. Anordnung, umfassend eine Leitungsanschlussvorrichtung (10) nach einem der Ansprüche 1 bis 6 und eine Tasche (30), die über Öffnungen, welche deren Einführen um Leitungen (40) herum ermöglichen, und über Mittel zum Verbinden (31) mit Leitungen sowie über einen Abfluss (32) verfügt, welcher dazu ausgelegt ist, das Fluid aus der Tasche (30) abzuführen.

8. Leitungsabschnitt, umfassend zwei Leitungen (40) und eine Anschlussvorrichtung (10) nach einem der Ansprüche 1 bis 6, wobei die Verbindungselemente (11) jeweils mit einer der Leitungen (40) fest verbunden sind.

9. Leitungsabschnitt, umfassend zwei Leitungen (40) und eine Anordnung nach Anspruch 7, wobei die Verbindungselemente (11) jeweils mit einer der Leitungen (40) fest verbunden sind, und wobei die Öffnungen der Tasche (30) um jede der Leitungen (40) herum auf dichte Weise fest verbunden sind.

10. Raumfahrzeug, umfassend einen Leitungsabschnitt nach einem der Ansprüche 8 oder 9.

## Claims

1. A device for connecting fluid conduits (10) comprising two junction elements (11) each having a connection section adapted to be secured to a conduit, and a connection element (12) linking the junction elements (11);
**characterized in that** each junction element (11) comprises at least two concentric tubes (13) defining a stack (14);
each stack (14) is linked only to a junction element (11);
the stacks of the two different junction elements (11) partially overlap each other; so that the tubes (13) of the two stacks (14) overlap each other in an alternating manner.

2. The conduit connection device (10) according to claim 1 comprising a shim (20) disposed between the junction element (12) and the stacks (14).

3. The conduit connection device according to claim 2, wherein the shim (20) is configured so as to exert a clamping force on the stacks.

4. The conduit connection device according to claim 2 **characterized in that** the shim (20) is composed of at least two parts.

5. The conduit connection device according to claim 2 **characterized in that** the shim (20) is made of metal.

6. The conduit connection device (10) according to any of claims 1 to 4 **characterized in that** the tubes (13) are made of a material from among steel or nickel alloys such as Inconel 625 or Inconel 718.

7. An assembly comprising a conduit connection device (10) according to any of claims 1 to 6 and a pouch (30) with orifices allowing its insertion around conduits (40) and conduit linking means (31) and a drain (32) adapted to discharge the fluid from the pouch (30).

8. A conduit section comprising two conduits (40) and a connection device (10) according to any of claims 1 to 6, wherein the junction elements (11) are each secured to one of the conduits (40).

9. A conduit section comprising two conduits (40) and an assembly according to claim 7, wherein the junction elements (11) are each secured to one of the conduits (40), and wherein the orifices of the pouch (30) are sealingly secured around each of the conduits (40).

10. A spacecraft comprising a conduit section according to any of claims 8 or 9.
